# DEMANDE DE BREVET EUROPEEN

(11) **EP 0 612 076 A1**
(43) Date de publication de la demande: **24.08.1994**
(21) Numéro de dépôt: 94400064.5
(22) Date de dépôt: 11.01.1994
(51) Int. Cl.: G21C 13/036

(54) **Elément de paroi modulaire d'une enceinte de recouvrement d'un récipient et en particulier du couvercle de cuve d'un réacteur nucléaire**

(30) Priorité: 17.02.1993 FR 9301799
(71) Demandeur: FRAMATOME, 92400 Courbevoie (FR)
(72) Inventeur: Falduti, Claude, F-91240 Saint-Michel-sur-Orge (FR); Bouron, Norbert, F-78260 Acheres (FR)
(74) Mandataire: Bouget, Lucien

(57) **Abrégé**

L'élément de paroi (35a, 35c, 35d) de l'enceinte comporte un moyen (46a, 46c, 49d) de prélèvement ou d'injection de fluide dans une chambre (44) délimitée par l'enceinte et la surface externe d'un récipient (32) renfermant un fluide à haute température. Le moyen de prélè- vement (46a, 46c, 46b) comporte des ouvertures (47a, 47c, 49d) sur la surface interne de l'élément de paroi et au moins un conduit de prélèvement ou d'injection (48, 50) débouchant sur la surface externe de l'élément de paroi. L'élément de paroi peut être un panneau modulaire calorifuge de recouvrement du couvercle (32) de la cuve d'un réacteur nucléaire à eau sous pression.

## Description

L'invention concerne un élément modulaire de paroi calorifuge d'une enceinte de confinement comportant un moyen de prélèvement ou d'injection de fluide et en particulier, un élément de paroi d'une enceinte de confinement et de recouvrement de la surface supérieure convexe du couvercle de la cuve d'un réacteur nucléaire à eau sous pression.

Les réacteurs nucléaires à eau sous pression comportent généralement une cuve renfermant le coeur du réacteur qui est plongé dans l'eau sous pression de refroidissement du réacteur.

La cuve du réacteur de forme générale cylindrique comporte un couvercle en forme de calotte sphérique qui peut être rapporté sur sa partie supérieure, de manière que le couvercle présente une surface supérieure externe convexe. Le couvercle est percé d'ouvertures au niveau de chacune desquelles est fixée par soudure en position verticale, une pièce tubulaire de traversée constituant un adaptateur assurant le passage d'un prolongateur d'une grappe de contrôle de la réactivité du coeur ou le passage d'un moyen de mesure à l'intérieur du coeur tel qu'une colonne de thermocouple.

Chacune des pièces tubulaires de traversée est engagée dans une ouverture traversant le couvercle de la cuve et soudée sur la surface inférieure concave du couvercle par une soudure annulaire.

Les adaptateurs destinés à recevoir un prolongateur d'une grappe de contrôle de la réactivité du coeur ont une partie supérieure saillante au-dessus du couvercle de la cuve sur laquelle est fixé un mécanisme de commande permettant de déplacer le prolongateur solidaire de la grappe de contrôle appelée barre de commande.

Des contrôles effectués sur les réacteurs nucléaires en service ont montré que certains des adaptateurs de traversée du couvercle de la cuve sont susceptibles de présenter des fissures, après un certain temps d'utilisation du couvercle, en particulier dans la zone de soudure des adaptateurs, au voisinage de la surface inférieure concave du couvercle. Ces fissures sont susceptibles d'évoluer jusqu'à traverser la totalité de la paroi de l'adaptateur. Dans ce cas, il peut se produire une fuite limitée mais gênante de fluide primaire constitué par de l'eau sous pression, vers l'extérieur du couvercle, à travers la fissure et l'espace compris entre l'adaptateur et l'ouverture de traversée du couvercle. L'eau sous pression constituant le liquide de fuite qui est à très haute température et qui se trouve dépressurisée s'évapore, si bien qu'il se produit un dégagement de vapeur au-dessus du couvercle. La vapeur contient certains produits de fission radio-actifs qui sont susceptibles de se retrouver dans l'atmosphère au-dessus de la cuve du réacteur nucléaire. Il est nécessaire de détecter très rapidement la présence d'un adaptateur de traversée du couvercle de la cuve présentant une fissure traversante conduisant à une fuite de fluide primaire, afin d'effectuer une réparation après arrêt du réacteur nucléaire et pour éviter le dégagement de substances radio-actives gazeuses dans l'enceinte de confinement du réacteur nucléaire.

Il est connu d'utiliser une enveloppe en matériau calorifuge appelée casing qui recouvre la surface supérieure convexe du couvercle de la cuve dans la zone de traversée des adaptateurs. Cette enveloppe calorifuge permet de réduire le flux thermique provenant de la cuve du réacteur, en direction des mécanismes de commande fixés à l'extrémité des adaptateurs.

Le casing comporte généralement une paroi supérieure plane qui comporte des ouvertures permettant d'assembler le casing autour des adaptateurs comportant les mécanismes de commande, lors de sa mise en place. D'autre part, le casing vient reposer, généralement par l'intermédiaire d'une paroi latérale cylindrique, sur un support de la jupe de ventilation du couvercle de la cuve ; l'ensemble étant assemblé de manière non étanche.

Il en résulte que l'enveloppe calorifuge n'assure aucun confinement des gaz de fuite qui pourraient se dégager éventuellement au-dessus du couvercle de la cuve, ces gaz de fuite éventuels seraient au contraire entraînés par l'air de refroidissement des mécanismes de commande de grappes qui circule autour du casing.

Il n'est donc pas possible de réaliser une détection de la présence éventuelle de gaz de fuite radioactifs au-dessus du couvercle, à l'intérieur de l'enveloppe calorifuge.

Le déposant de la présente demande de brevet a proposé d'utiliser une enceinte calorifuge étanche de confinement et de recouvrement du couvercle de la cuve d'un réacteur nucléaire à eau sous pression qui fait l'objet d'une demande de brevet déposée le même jour que la présente demande.

L'enceinte de confinement qui est réalisée de manière à être la plus étanche possible aux gaz de fuite pouvant provenir de la cuve est fixée sur le couvercle de cuve et autour des adaptateurs, de manière à empêcher tout échappement de gaz substantiel. Cette enceinte étanche délimite avec la surface supérieure de la cuve une chambre étanche dans laquelle les gaz de fuite provenant de la cuve du réacteur seront piégés. Pour effectuer la détection de la présence de gaz radio-actifs traduisant une fuite au niveau d'un adaptateur, on associe à l'enceinte de confinement un dispositif de prélèvement et éventuellement d'injection de gaz qui est relié à une installation de détection.

De préférence, une telle enceinte étanche est réalisée sous forme modulaire en assemblant des éléments de paroi tels que des panneaux qui comportent des moyens de jonction équipés de joints étanches.

De manière à assurer une détection efficace de la présence d'adaptateurs présentant une fuite, il est nécessaire de prévoir des moyens de prélèvement répartis de manière satisfaisante sur la paroi de l'enceinte.

On ne connaissait pas jusqu'ici de moyens de réalisation d'une enceinte qui permettent d'obtenir, lors de la réalisation de l'enceinte, un moyen de prélèvement efficace de gaz à l'intérieur de cette enceinte.

Ce problème et la solution qui est donnée par l'invention ont une portée beaucoup plus générale qu'une application limitée à la détection de fuite à travers le couvercle de la cuve d'un réacteur nucléaire à eau sous pression.

En effet, dans le cas d'enceinte ou de canalisation renfermant un fluide à haute température et éventuellement à haute pression, il peut être avantageux de prévoir une enceinte calorifuge entourant tout ou partie de la surface externe du récipient ou de la canalisation, qui puisse être réalisée sous forme modulaire et qui permette de réaliser un prélèvement ou une injection de gaz dans une chambre délimitée par la paroi de l'enceinte et par la surface externe du récipient ou de la canalisation.

Le but de l'invention est donc de proposer un élément de paroi calorifuge d'une enceinte de confinement destinée à recouvrir une partie au moins de la surface externe d'un récipient ou d'une canalisation renfermant un fluide à haute température et à ménager une chambre de confinement et de récupération de fluide avec la surface externe du récipient, qui permette de réaliser de manière simple et efficace un prélèvement et/ou une injection de gaz dans la chambre de confinement et de récupération de fluide.

Dans ce but, l'élément de paroi modulaire suivant l'invention comporte au moins un moyen de prélèvement de fluide dans la chambre ayant au moins une ouverture débouchant sur une surface interne de l'élément de paroi dirigée en service vers l'intérieur de l'enceinte et au moins une ouverture débouchant sur une surface externe de l'élément de paroi opposée à la surface interne.

De préférence, l'élément de paroi modulaire est un panneau auquel est incorporée au moins une canalisation ou un réseau de prélèvement ou d'injection de fluide.

Afin de bien faire comprendre l'invention, on va maintenant décrire, à titre d'exemple non limitatif, en se référant aux figures jointes en annexe, la réalisation d'une enceinte étanche en utilisant des éléments de paroi modulaires selon l'invention, des éléments de paroi modulaires utilisés pour la réalisation d'une enceinte étanche ainsi que la réalisation d'une enceinte étanche suivant l'invention pour assurer le confinement d'une partie de la surface supérieure d'un couvercle de cuve d'un réacteur nucléaire à eau sous pression.

La figure 1 est une vue en coupe d'une enceinte étanche de confinement d'un récipient ou d'une canalisation réalisée à partir de panneaux modulaires suivant l'invention.

La figure 2 est une vue en coupe d'un panneau modulaire calorifuge suivant l'invention et suivant un premier mode de réalisation.

La figure 3 est une vue en coupe d'un panneau calorifuge modulaire suivant l'invention et suivant un second mode de réalisation.

La figure 4 est une vue en coupe d'un panneau modulaire calorifuge suivant l'invention et suivant un troisième mode de réalisation.

La figure 5 est une vue en coupe d'un panneau calorifuge modulaire suivant l'invention et suivant un quatrième mode de réalisation.

La figure 6 est une vue en perspective de deux panneaux calorifuges modulaires suivant l'invention se raccordant l'un à l'autre.

La figure 7 est une vue en élévation et en coupe par un plan vertical d'un couvercle de cuve d'un réacteur nucléaire à eau sous pression comportant une enceinte de confinement réalisée selon l'invention.

La figure 8 est une vue en coupe à grande échelle d'une partie de la paroi de l'enceinte de confinement du couvercle de cuve représentée sur la figure 7.

La figure 9 est une vue de dessus de l'enceinte de confinement du couvercle de cuve représentée sur la figure 7.

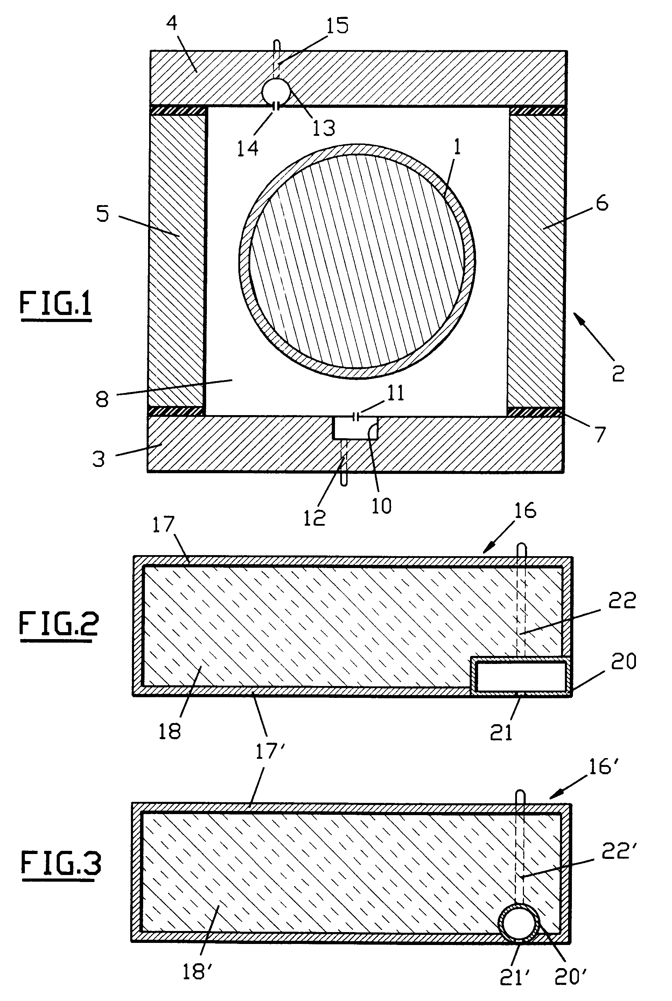

Sur la figure 1, on voit la section circulaire transversale d'un appareil 1 qui peut être un récipient ou une canalisation renfermant un fluide à haute température et éventuellement à haute pression.

L'appareil 1 est disposé à l'intérieur d'une enceinte 2 comportant une paroi calorifuge permettant d'isoler thermiquement l'appareil 1 du milieu extérieur à l'enceinte.

La paroi de l'enceinte 2 est réalisée sous forme modulaire, à partir de panneaux calorifuges tels que 3, 4, 5 et 6 qui sont reliés entre eux suivant des zones de jonction telles que 7 dans lesquelles sont disposés des joints d'étanchéité.

L'enceinte 2 délimite autour de l'appareil 1, une chambre 8 entre la paroi interne des panneaux 3, 4, 5, 6 et la surface externe de l'appareil 1. La chambre 8 est isolée du milieu extérieur, de manière étanche, de sorte que l'enceinte 2 réalise le confinement de la surface externe de l'appareil 1 et la retenue de fluide pouvant provenir du volume intérieur de l'appareil 1, en cas de fuite à travers sa paroi.

La détection de fluide et en particulier d'espèces gazeuses provenant de l'intérieur de l'appareil 1, dans la chambre 8 permet de déceler l'apparition de fuites à travers la paroi de l'appareil 1.

Pour détecter la présence d'un fluide provenant de l'appareil 1 dans la chambre 8, par exemple sous la forme d'un gaz de fuite, on effectue un prélèvement de gaz à l'intérieur de la chambre 8, ce gaz pouvant être constitué par exemple par de l'air en mélange avec certaines espèces gazeuses provenant de l'appareil 1.

Selon l'invention, le prélèvement peut être réalisé à partir de moyens de prélèvement prévus dans certains des panneaux modulaires constituant l'enceinte 2.

Le panneau 3 comporte une conduite de prélèvement 10 dont la section est visible sur la figure 1. Cette conduite de prélèvement est intégrée au panneau 3 et disposée dans l'épaisseur de sa paroi, au voisinage de sa surface interne dirigée vers l'intérieur de l'enceinte 2, en vis-à-vis de la surface externe de l'appareil 1.

La paroi interne de la conduite 10 dirigée vers l'intérieur de l'enceinte 2 constitue une partie de la surface interne du panneau 3.

Dans le cas d'un appareil 1 d'une certaine longueur axiale, la conduite 10 pourra être disposée dans le panneau 3 suivant sa longueur. La paroi intérieure de la conduite 10 comporte des ouvertures telles que 11 débouchant dans la chambre 8 à l'intérieur de l'enceinte 2 espacées de manière sensiblement régulière suivant la direction longitudinale de la conduite 10.

De plus, un conduit de prélèvement 12 relié à la conduite 10 débouche sur la surface externe du panneau, de manière à relier la conduite de prélèvement 10 à un appareil d'analyse et de détection situé à l'extérieur de l'enceinte qui peut être relié au conduit de liaison 12.

Le panneau 4 comporte une conduite de prélèvement 13 qui est intégrée à la paroi du panneau, disposée suivant sa longueur et placée dans une position adjacente à la surface intérieure du panneau dirigée vers l'intérieur de l'enceinte et la surface externe de l'appareil 1.

La conduite 13 est à section circulaire et comporte, suivant une génératrice dirigée vers l'intérieur de l'enceinte, des ouvertures de prélèvement 14 débouchant dans la chambre 8.

Un conduit 15 est relié à la conduite de prélèvement 13 et débouche sur la surface extérieure du panneau 4.

Les conduites de prélèvement 10 à section rectangulaire et 13 à section circulaire peuvent être utilisées pour réaliser le prélèvement de gaz à l'intérieur de la chambre 8, par l'intermédiaire des conduits 12 et 15. Dans ce cas, le prélèvement est effectué suivant la longueur de l'appareil 1 qui peut être par exemple un récipient ou une canalisation à section circulaire.

L'une des conduites, par exemple la conduite 13, pourrait être utilisée pour effectuer l'injection d'un gaz traceur à l'intérieur de la chambre 8, par exemple pour réaliser l'étalonnage de l'appareil de détection de fuite ou encore pour réaliser un balayage de la chambre 8 par un gaz de nettoyage et d'évacuation.

Les panneaux latéraux 5 et 6 de l'enceinte 2 peuvent être constitués par de simples panneaux calorifuges munis de moyens de raccordement étanches aux panneaux 3 et 4.

La réalisation d'une enceinte telle que l'enceinte 2 à partir d'éléments modulaires constitués par des panneaux, autour de l'appareil 1, ne nécessite que des opérations de mise en place et d'assemblage de panneaux qui comportent, de manière intégrée, des moyens de prélèvement et d'injection de gaz dans une chambre étanche délimitée par l'enceinte autour de l'appareil dont on réalise l'isolation thermique.

Sur les figures 2 et 3, on a représenté des panneaux calorifuges qui peuvent constituer des éléments de paroi suivant l'invention tels que les éléments de paroi 3 et 4 de l'enceinte 2 représentée sur la figure 1.

Le panneau 16 représenté sur la figure 2 comporte une enveloppe externe 17 qui peut être par exemple constituée par une tôle métallique. A l'intérieur de l'enveloppe 17 est disposé un matériau de remplissage calorifuge 18. Un conduit de prélèvement 20 peut être constitué par une tôle pliée à angle droit soudée dans un angle de l'enveloppe 17 de forme parallélépipédique ou par un tube de section parallélépipédique rapporté. La paroi 17, au niveau du conduit 20, est percée d'ouvertures 21 et un conduit 22 est relié à la conduite 20 de manière à déboucher sur la face du panneau 16 opposée à la face sur laquelle se trouvent les ouvertures 21.

Dans certaines applications, l'enveloppe 17 peut être constituée par une tôle inoxydable et le matériau de remplissage 18, par des feuilles gaufrées en acier inoxydable empilées les unes sur les autres pour constituer un matériau feuilleté et alvéolé.

Dans ce cas, la conduite de prélèvement 20 peut être constituée par une tôle pliée à angle droit soudée dans un angle du panneau, de manière à ménager un espace de circulation de gaz et de prélèvement dans l'angle du panneau. Des ouvertures 21 sont alors prévues à travers la paroi interne de l'enveloppe 17 qui est dirigée vers l'intérieur de l'enceinte réalisée à partir de panneaux modulaires tels que le panneau 16.

Le conduit de prélèvement 22 débouche sur la surface externe de l'enveloppe 17 et constitue un ajutage de branchement d'un circuit ou d'un appareil.

Sur la figure 3, on a représenté un panneau 16' constitué par une enveloppe métallique 17' à l'intérieur de laquelle est disposé un matériau de remplissage calorifuge 18'.

La conduite de prélèvement 20' est constituée par un tube à section circulaire fixé, par exemple par soudure, sur la paroi interne de l'enveloppe 17' et comportant des ouvertures de prélèvement 21' qui traversent la paroi inférieure de l'enveloppe 17' et la paroi du tube 20'.

Un conduit 22' est relié au tube 20' et débouche sur la surface supérieure de l'enveloppe 17' par un ajutage de branchement.

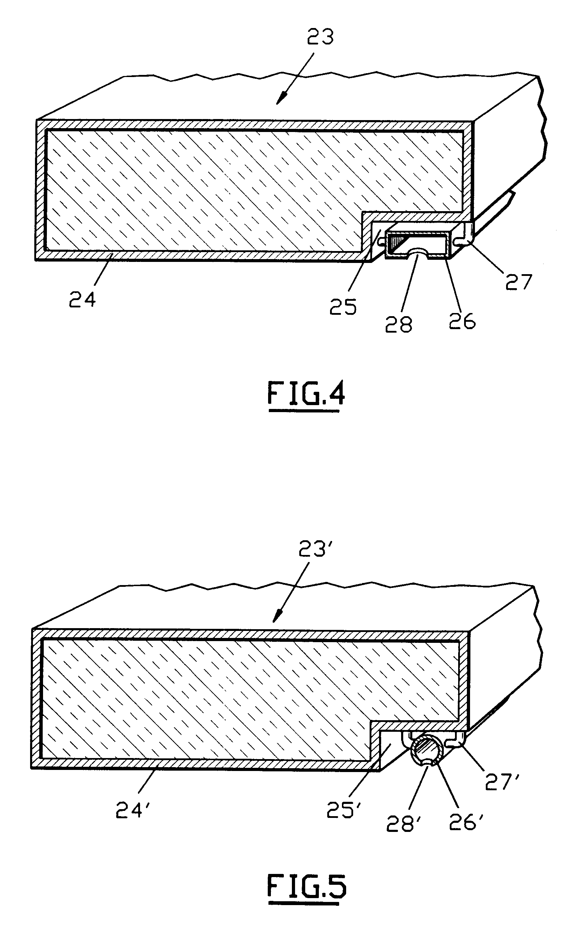

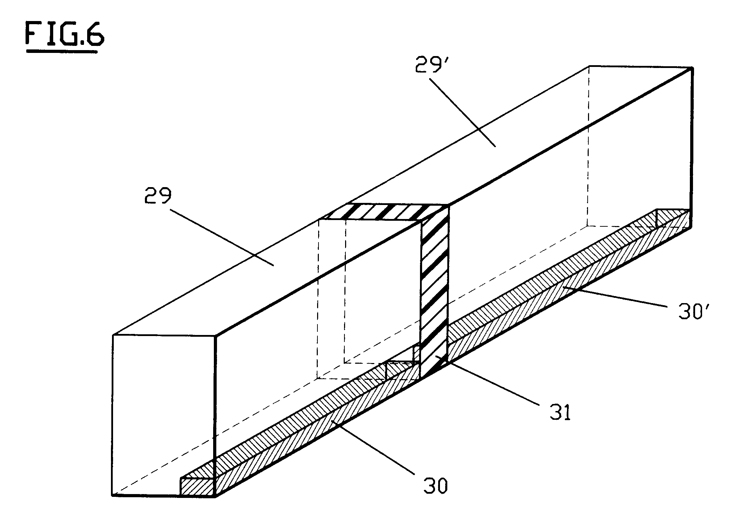

Sur les figures 4 et 5, on a représenté des panneaux calorifuges suivant l'invention désignés de manière générale par les repères 23 et 23'. Les panneaux 23 et 23' peuvent comporter une structure sensiblement analogue à la structure des panneaux 16 et 16' représentés sur les figures 2 et 3, constituée par une enveloppe métallique renfermant un matériau calorifuge.

L'enveloppe métallique 24 ou 24' du panneau 23 ou 23' comporte sur sa surface interne destinée à être dirigée vers l'intérieur de l'enceinte, un dégagement 25 ou 25' dans lequel est logée et fixée la conduite de prélèvement 26 ou 26', par l'intermédiaire de pattes ou étriers de fixation 27 ou 27'.

La conduite de prélèvement 26 à section rectangulaire comporte des ouvertures 28 débouchant du côté de la face interne du panneau 23.

De même, la conduite de prélèvement 26' de forme tubulaire à section circulaire comporte des ouvertures 28' débouchant du côté de la face interne du panneau 23'.

Un conduit de prélèvement (non représenté) est relié à la conduite 26 (ou 26') et débouche à son autre extrémité sur la face externe du panneau 23 (ou 23').

Dans tous les cas, il est avantageux de disposer le conduit de prélèvement du côté de la face interne du panneau, de manière à faciliter le prélèvement et à éviter de dégrader de manière importante l'efficacité thermique du calorifuge. Les conduites de prélèvement sont donc disposées de manière préférentielle, au voisinage de la face du panneau la plus chaude et disposée en vis-à-vis de l'appareil à calorifuger.

Dans tous les cas, les faces latérales de panneaux qui peuvent être constituées par exemple par de simples tôles planes permettent de rapporter les panneaux les uns contre les autres de manière étanche en intercalant un joint d'étanchéité entre les panneaux, pour la constitution d'une enceinte par éléments modulaires. Comme représenté sur la figure 1, les faces latérales des panneaux peuvent également être rapportées de manière étanche sur la face interne d'autres panneaux pour constituer l'enceinte.

Les panneaux peuvent comporter une seule canalisation de prélèvement ou plusieurs canalisations formant un réseau et constituant à lui seul le dispositif de prélèvement de l'enceinte ou un élément modulaire de ce dispositif de prélèvement.

Comme représenté sur la figure 6, les panneaux adjacents tels que 29 et 29' peuvent être assemblés, de manière à raccorder les conduits de prélèvement prévus sur chacun des panneaux.

Le panneau 29 et le panneau 29' qui peuvent être réalisés sous une forme telle que représentée sur la figure 2 comportent chacun un conduit de prélèvement longitudinal 30 et 30' respectivement.

Les panneaux 29 et 29' sont assemblés suivant deux faces latérales, par l'intermédiaire d'un dispositif de connexion 31 comportant des joints d'étanchéité et permettant de raccorder de manière étanche les faces latérales des panneaux 29 et 29' et les parties d'extrémité des conduits 30 et 30'.

Les conduits 30 et 30' raccordés de manière étanche permettent de constituer un conduit unique s'étendant sur toute la longueur des panneaux 29 et 29' raccordés entre eux pour constituer l'enceinte.

L'élément modulaire de paroi suivant l'invention permet donc de constituer une partie d'une enceinte étanche dans laquelle est intégré un dispositif de prélèvement d'un fluide tel qu'un gaz à l'intérieur de l'enceinte, tout ou partie du dispositif de prélèvement étant ménagé dans la structure de l'élément de paroi modulaire calorifuge de l'enceinte.

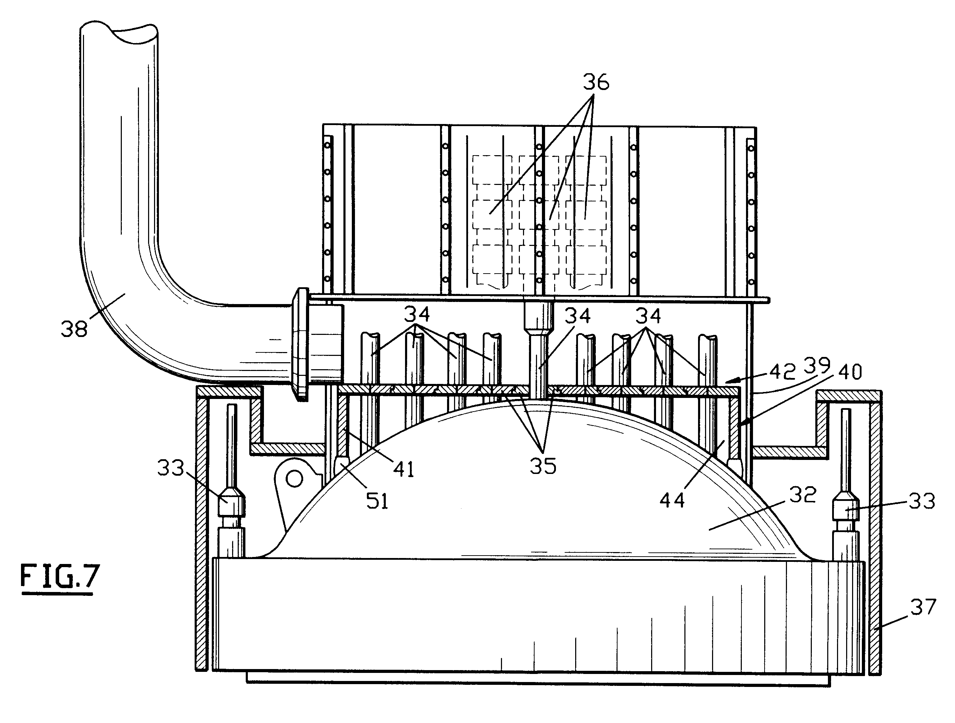

Sur la figure 7, on voit le couvercle 32 de la cuve d'un réacteur nucléaire à eau sous pression qui est fixé par des goujons 33 sur la cuve du réacteur (non représentée).

Le couvercle 32 comporte une surface externe bombée en forme de calotte sphérique convexe vers l'extérieur. Le couvercle de la cuve est traversé par des adaptateurs tubulaires 34 ayant des axes verticaux et qui comportent une partie saillante au-dessus du couvercle de la cuve, à l'intérieur d'une jupe cylindrique 39 reposant sur la partie supérieure du couvercle de cuve 32.

Chacun des adaptateurs 34 comporte une partie supérieure sur laquelle vient se fixer un mécanisme 36 de déplacement d'un prolongateur solidaire d'une grappe de commande.

Les mécanismes 36 permettent de déplacer des grappes de commande dans le coeur du réacteur nucléaire, à l'intérieur de la cuve dont le couvercle 32 assure la fermeture.

A l'extérieur de la jupe 39 en tôle métallique entourant les adaptateurs 34, est disposée une paroi calorifuge externe 37 limitant les transferts de chaleur du couvercle de la cuve 32, vers l'atmosphère extérieure.

Une conduite d'aspiration 38 est reliée à la jupe 39, de manière à assurer une aspiration d'air pour refroidir les mécanismes 36.

A l'intérieur de la jupe 39, sur la surface supérieure convexe du couvercle 32, est disposée une enceinte calorifuge 40 constituée sous forme modulaire par des éléments de paroi ou panneaux suivant l'invention.

L'enceinte calorifuge 40 comporte une paroi latérale cylindrique 41 et une paroi supérieure plane 42 disposées en-dessous de la conduite d'aspiration 38.

Comme il sera expliqué plus loin, la paroi supérieure plane 42 et éventuellement la paroi latérale cylindrique 41 sont constituées d'éléments de paroi modulaires suivant l'invention incorportant un dispositif de prélèvement de gaz à l'intérieur d'une chambre 44 délimitée par la surface intérieure de l'enceinte 40 et la surface extérieure convexe du couvercle 32.

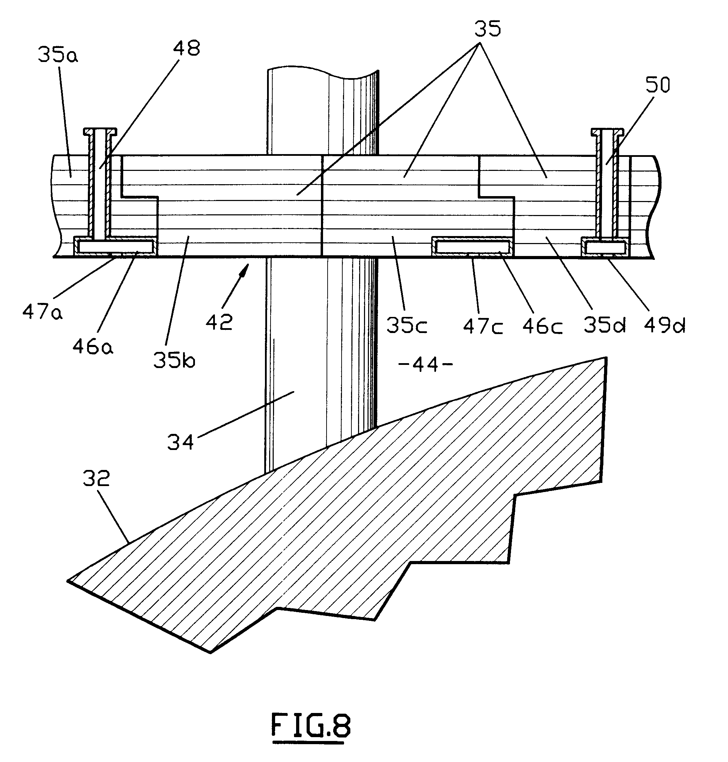

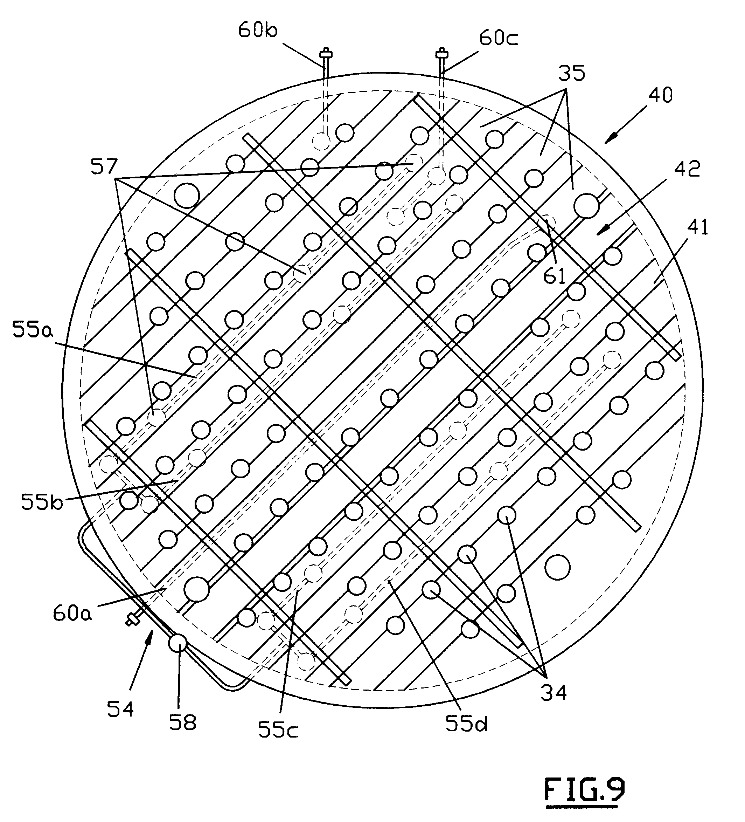

Comme il est visible sur les figures 8 et 9, la paroi supérieure plane 42 de l'enceinte calorifuge 40 est constituée par des panneaux calorifuges 35 juxtaposés et reliés de manière étanche, par l'intermédiaire de faces latérales.

Certains des panneaux 35 constituent des éléments de paroi suivant l'invention comportant des moyens de prélèvement ou d'injection de gaz dans la chambre 44 ménagée entre l'enceinte étanche 40 et le couvercle de cuve 32.

Sur la figure 8, on a représenté deux panneaux 35a et 35c sensiblement analogues aux panneaux 16 représentés sur la figure 2. Les panneaux 35a et 35c comportent un conduit de prélèvement de gaz dans la chambre 44, respectivement 46a et 46c comportant des ouvertures respectivement 47a et 47c traversant la paroi interne des panneaux 35 dirigée vers la surface du couvercle de cuve 32.

Les conduites de prélèvement 46a et 46c communiquent de plus avec des conduits tels que 48 débouchant par un ajutage sur la surface externe du panneau correspondant.

Certains panneaux tels que 35d comportent des conduites d'injection 49d communiquant avec un conduit 50 traversant le panneau 35d correspondant jusqu'à la face extérieure du panneau sur laquelle le conduit 50 débouche par un ajutage de raccordement à un dispositif d'injection.

Comme il est visible sur la figure 9, les panneaux 35 sont disposés parallèlement les uns aux autres et raccordés suivant leurs faces latérales, avec interposition de joints d'étanchéité, de manière que la paroi supérieure 42 de l'enceinte calorifuge 40 soit la plus étanche possible aux gaz contenus par la chambre 44 au-dessus du couvercle de la cuve.

De plus, la paroi supérieure 42 de l'enceinte 40 est reliée de manière étanche à la paroi latérale cylindrique 41 et la paroi cylindrique 41 vient reposer sur le couvercle de cuve par l'intermédiaire d'un joint d'étanchéité 51 (visible sur la figure 7).

Certains bords de panneaux 35 comportent des ouvertures permettant le passage des adaptateurs 34 dont le réseau et la disposition sur le couvercle de cuve sont représentés sur la figure 9.

Des joints d'étanchéité sont intercalés entre les ouvertures des bords des panneaux 35 et les adaptateurs 34, de sorte que l'enceinte 40 puisse réaliser le confinement et la retenue des gaz contenus dans la chambre 44.

En cas de fuite au niveau de la traversée du couvercle de cuve par un adaptateur 34, le fluide provenant de la cuve du réacteur est introduit sous forme gazeuse dans la chambre 44.

Les panneaux 35, comme expliqué plus haut en regard de la figure 8, comportent des moyens de prélèvement de ces gaz qui peuvent être recueillis par un dispositif de détection, de manière à pouvoir déceler la présence de fuites au niveau des adaptateurs 34.

Comme il est visible sur la figure 9, un réseau de prélèvement de gaz 54 est constitué par quatre lignes parallèles 55a, 55b, 55c et 55d qui sont reliées entre elles et qui sont intégrées chacune à un panneau 35 de la même façon que les conduites de prélèvement 46a et 46c sont intégrées aux panneaux 35a et 35c représentés sur la figure 8.

Sur chacune des lignes de prélèvement 55a, 55b, 55c et 55d sont disposées des buses de prélèvement 57 mettant en communication la ligne correspondante avec la chambre 44 en-dessous de l'enceinte calorifuge 40, de la même manière que les ouvertures 47a et 47c des conduites 46a et 46c représentées sur la figure 8.

Une ligne de prélèvement générale 58 visible sur la figure 9 est reliée au réseau de prélèvement 54 de manière à assurer sa liaison à un dispositif de détection pour analyser le gaz prélevé à l'intérieur de la chambre 44.

Des lignes d'injection sont également associées aux panneaux 35 de l'enceinte 40 de manière à réaliser le contrôle et l'étalonnage du dispositif de prélèvement et de détection.

Une première ligne d'injection 60a est disposée dans une direction sensiblement diamétrale de la paroi supérieure 42 de l'enceinte 40 et intégrée à un panneau 35 disposé suivant un diamètre de la paroi 42.

La ligne d'injection 60a comporte une buse d'injection 61.

Deux lignes secondaires d'injection 60b et 60c sont également intégrées à des panneaux 35, dans une position décalée latéralement par rapport aux panneaux placés en positions centrale et diamétrale.

Les lignes d'injection 60a, 60b et 60c comportent des ajutages à leur extrémité externe permettant de les relier à un dispositif d'injection d'un gaz permettant le contrôle et l'étalonnage du dispositif de prélèvement, dans la chambre 44.

Les lignes d'injection 60a, 60b, 60c permettent de réaliser l'injection dans la chambre 44 d'un gaz traceur pour tester et étalonner le dispositif de prélèvement et de détection comportant les lignes 55a à 55d.

L'enceinte 40 peut être réalisée de manière simple en assemblant des panneaux modulaires 35 dont certains sont réalisés de manière analogue aux panneaux 35a, 35c et 35d et comportent des dispositifs de prélèvement et/ou d'injection intégrés à leur structure.

La paroi latérale 41 de forme cylindrique peut être également constituée par des panneaux calorifuges modulaires assemblés les uns aux autres avec interposition de joints d'étanchéité. Certains de ces panneaux peuvent également être réalisés sous la forme d'éléments modulaires selon l'invention et comporter des dispositifs de prélèvement et ou d'injection intégrés.

L'invention permet donc de réaliser de manière simple une enceinte de confinement, de récupération et de détection de gaz de fuite autour ou sur une partie d'une paroi externe d'un récipient ou canalisation renfermant un fluide à haute température.

Les dispositifs de prélèvement et/ou d'injection sont mis en place simultanément aux panneaux constituant les parois de l'enceinte.

L'invention ne se limite pas aux modes de réalisation qui ont été décrits.

C'est ainsi qu'on peut imaginer des éléments de paroi qui présentent une forme différente des éléments modulaires qui ont été décrits ci-dessus. Les moyens de prélèvement et d'injection intégrés à ces éléments modulaires peuvent être différents de ceux qui ont été décrits.

Enfin, les éléments modulaires suivant l'invention peuvent être utilisés pour la réalisation d'enceintes différentes d'une enceinte de confinement d'une partie de la surface supérieure du couvercle de la cuve d'un réacteur nucléaire à eau sous pression. Ces éléments de paroi peuvent être utilisés pour réaliser des enceintes d'isolation thermique et de confinement de tout récipient, canalisation ou appareillage destiné à renfermer un fluide à haute température et éventuellement à haute pression.

## Revendications

**1.-** Elément de paroi modulaire d'une enceinte de confinement destinée à recouvrir une partie au moins de la surface externe d'un récipient (1, 32) ou d'une canalisation renfermant un fluide à haute température et à ménager une chambre (8, 44) de confinement et de récupération de fluide avec la surface externe du récipient, caractérisé par le fait qu'il comporte au moins un moyen de prélèvement de fluide (10, 20, 20', 26, 26', 30, 30', 46a, 46c, 55a, 55b, 55c, 55d) dans la chambre (8, 44) ayant au moins une ouverture (11, 21, 21', 28, 28', 47a, 47c, 57) débouchant sur une surface interne de l'élément de paroi qui constitue une surface dirigée vers l'intérieur de l'enceinte (2, 40) et au moins une ouverture de prélèvement (12, 22, 22', 48) débouchant sur une surface externe de l'élément de paroi opposée à la surface interne.

**2.-** Elément de paroi suivant la revendication 1, caractérisé par le fait que le moyen de prélèvement est constitué par au moins une conduite (10, 20, 20', 26, 26', 30, 30', 46a, 46c, 55a, 55b, 55c, 55d) logée dans une cavité ménagée dans l'élément de paroi, au voisinage de sa surface interne et reliée à un conduit de prélèvement (22, 22') traversant l'élément de paroi et débouchant sur la surface externe.

**3.-** Elément de paroi suivant la revendication 2, caractérisé par le fait que la conduite (20, 20') est constituée au moins partiellement par un composant de la structure de l'élément de paroi (16, 16').

**4.-** Elément de paroi suviant la revendication 2, caractérisé par le fait que la conduite (26, 26') est rapportée et fixée sur l'élément de paroi.

**5.-** Elément de paroi suivant l'une quelconque des revendications 2, 3 et 4, caractérisé par le fait qu'elle comporte des moyens (31) de raccordement étanche de la conduite (30) à une conduite (30') d'un second élément de paroi modulaire.

**6.-** Elément de paroi selon l'une quelconque des revendications 2 à 5, caractérisé par le fait qu'il comporte au moins une conduite (30, 30', 46a, 46c, 55a, 55b, 55c, 55d) d'un réseau de prélèvement de fluide dans la chambre (8, 44).

**7.-** Elément de paroi selon l'une quelconque des revendications 1 à 6, caractérisé par le fait qu'il comporte de plus un moyen d'injection de fluide (13, 49d, 60a, 60b, 60c) dans la chambre (8, 44) ayant au moins une ouverture (14, 61) débouchant sur une surface interne de l'élément de paroi et au moins un moyen (15, 50) de raccordement à une ligne d'injection débouchant sur la surface externe de l'élément de paroi.

**8.-** Elément de paroi modulaire d'une enceinte de confinement et de recouvrement d'une partie au moins de la surface externe convexe du couvercle (32) de la cuve d'un réacteur nucléaire à eau sous pression traversé par une pluralité d'adaptateurs (34), caractérisé par le fait qu'il est constitué par un panneau calorifuge (35, 35a, 35c, 35d) comportant au moins une conduite de prélèvement ou d'injection (46a, 46c, 49d, 55a, 55b, 55c, 55d, 60a, 60b, 60c) et des parois latérales de raccordement à d'autres panneaux calorifuges.

**9.-** Elément de paroi suivant la revendication 8, caractérisé par le fait que le panneau comporte de plus sur l'une de ses faces latérales des ouvertures de passage d'un adaptateur (34).
